# EUROPEAN PATENT APPLICATION

(11) **EP 4 822 313 A1**
(43) Date of publication of application: **14.10.2026**
(21) Application number: 25170005.0
(22) Date of filing: 11.04.2025
(51) Int. Cl.: G01K 1/02, G01K 1/14

(54) **TEMPERATURE MEASURING DEVICE FOR MEASURING A TEMPERATURE OF FOOD AND/OR OF A COOKING ENVIRONMENT**

(71) Applicant: Gorenje d.o.o., 3320 Velenje (SI)
(72) Inventor: Strajhar, Franci, 3222 Dramlje (SI); Perini, Paolo, 20090 Buccinasco (IT); Delic , Diana, 3313 Polzela (SI); Brozic , Luka, 51500 Krk (HR)
(74) Representative: Isarpatent

(57) **Abstract**

A temperature measuring device (10) for measuring a temperature of a food and/or of a cooking environment, comprises a first part (1) which includes at least one first temperature sensor (3) and an electronic component (4) for operating the at least one first temperature sensor (3); a first holding part (5a), to which the first part (1) is connected; and a second part (2) and a second holding part (5b) to which the second part (2) is connected, wherein the first holding part (5a) and/or the second holding part (5b) comprises an angled shape with regard to its longitudinal extent and wherein the first holding part (5a) can be physically connected and removed with the second holding part (5b), wherein the first holding part (5a) and/or the second holding part (5b) comprises a fixture element (20a, 20b) which is arranged at a lateral side of the first holding part (5a) and/or of the second holding part (5b) and by which the first holding part (5a) and/or of the second holding part (5b) can be attached at a cookware (30) in a predefined position for measuring the temperature of the food and/or of the cooking environment, wherein the second part (2) includes at least one second temperature sensor (6) and the electronic component (4) is configured to operate the at least one second temperature sensor (6) and wherein the at least one first temperature sensor (3) and the at least one second temperature sensor (6) and the electronic component (4) are configured such that a first range of a temperature to be measured by the at least one first temperature sensor (3) at least partly differs from a second range of a temperature to be measured by the at least one second temperature sensor (6), for example such that the second range of temperature covers temperatures as the first range of temperature and also greater than 100 °C.

## Description

### FIELD OF THE INVENTION

The present invention relates to a temperature measuring device for measuring temperature of food and/or of a cooking environment.

### BACKGROUND OF THE INVENTION

Meat probes for measuring the temperature in meat during the cooking process typically have a part where a temperature sensor is located, wherein the number of temperature sensors in this part ranges usually from 1 up more, for example five.

On the measuring side a marked line can be engraved till which the probe needs to be inserted into the meat due to the provision of low temperatures since a possible harm to electronics, which are typically located in the sensing part, if the temperature exceeds 100°C can be possible. Wireless meat probes can have a communication part and for the storage a charger can be used and also for charging up a battery inside the probe, which supports the electronics inside the probe for sending signal to paired (connected) devices (phone, tablet,...).

For known meat probes a maximum internal (food preparation) temperature can be 105°C.

All supported devices which are in the range of a sending signal (which can be reached by a wireless communication device of the temperature measuring device, for example an oven, a phone, a hob etc.) can receive data from the temperature measuring device. On the other side also a pairing mode with a particular external device can be available - that means, that the temperature measuring device can be paired with an external device after the temperature measuring device is available just for the paired device in a working mode - for example - when the temperature measuring device is taken from a charger it can automatically connect with a paired device.

Document US 2016/0377490 A1 describes a food thermometer for measuring temperature of a food exposed to heat. A portion for measuring the temperature can include a particular sensor.

Since for some particular processes or environments for food preparation the prevailed temperatures can also exceed a critical temperature of 100°C it is desired to improve the temperature measuring device such that measuring also temperatures above 100 °C could be achieved.

### SUMMARY OF THE INVENTION

It is an object of the invention to improve the ability of measuring the temperature of food and/or of the environment for food preparation such that different sensing means are provided which can be used each for a particular range of expected temperature.

Further, the attachment of the temperature measuring device at a cookware can be improved. Further, the position of the temperature measuring device and of the second part can be better adjusted an it can be used in two positions, in particular at the edge or more towards the center of the cookware (container). The temperature measuring device is more adjustable by the height when using different shapes and heights of the cookware such as pots. This also gives the user the option of adjusting to their cooking process. By the fixture elements at the holding parts two positions are possible and the correct use of the temperature measuring device can be triggered (such that it isn't insert into the liquid part of cooking environment, which can reach over 100°C).

The object is solved by the subject-matter of the independent claims.

The present invention pertains a temperature measuring device for measuring temperature of food and/or of a cooking environment according to claim 1.

Preferred embodiments are subject of the dependent claims.

According to the invention the temperature measuring device for measuring a temperature of a food and/or of a cooking environment, comprises a first part which includes at least one first temperature sensor and an electronic component for operating the at least one first temperature sensor; a first holding part, to which the first part is connected; and a second part and a second holding part to which the second part is connected, wherein the first holding part and/or the second holding part comprises an angled shape with regard to its longitudinal extent and wherein the first holding part can be physically connected and removed with the second holding part, wherein the first holding part and/or the second holding part comprises a fixture element which is arranged at a lateral side of the first holding part and/or of the second holding part and by which the first holding part and/or of the second holding part can be attached at a cookware in a predefined position for measuring the temperature of the food and/or of the cooking environment, wherein the second part includes at least one second temperature sensor and the electronic component is configured to operate the at least one second temperature sensor and wherein the at least one first temperature sensor and the at least one second temperature sensor and the electronic component are configured such that a first range of a temperature to be measured by the at least one first temperature sensor at least partly differs from a second range of a temperature to be measured by the at least one second temperature sensor.

The temperature measuring device can send a signal when it is low of charge - when it is placed in a charger a charging can be supported and other functions switched off.

The temperature measuring device can be a portable device which can be sticked partly inside the food to be measured and/or in or at the particular environment where the food should be prepared or cooked, in particular with that part which is able to sustain the expected temperatures which can arise there. For example, if in an environment or in the food itself a temperature of above 100 °C is expected it is recommended to use the second part there. Under this example and for this purpose there may be no electronics included in the second part which can be sensitive to temperatures above 100 ° C and the first part must be placed out of the cooking environment which is over 100°C.

The food can be represented by all possible kinds of food, for example meat, vegetables, liquids, or similar. The environment for preparing the food can be represented for example by a heated or even boiling liquid such as oil or water in a cookware or heated air in a cavity of an oven.

For example, liquid food can be cooked and in that scenario a tip of the second part (which can be shorter, longer or equal in length than the first part) can be used to measure the temperature. Further, food like a steak can be prepared, wherein in that scenario the temperature measuring device can be used in the same way as in the oven, in particular example a longer part (first part) can be sticked in the meat.

The first part and/or the second part can be embodied as longitudinal parts, for example with a tip at its end by which it can be sticked into the food or just placed in the particular environment. Operating the first or second temperature sensor(s) can mean an activation of the sensor and monitoring the measured temperature or measuring the temperature at one or several particular time (moments). The first or second temperature sensor(s) can be connected to the electronic component by means of conductors. The electronic component can comprise a controller, a battery (or capacitor as source of energy) and a wireless communication device which can all be powered by the battery.

The first range of temperature and the second range of temperature to be measured by the particular sensor can be pre-set in the controller and the controller can be able to receive the particular temperature ranges from the particular sensor. Further, the controller can also be able to receive signals and operate the particular sensors at the same time for the case of measuring at the overlapping temperatures if any. The first range and second range of temperature can also be disjunct.

When choosing the particular first or second temperature sensor (and its corresponding first or second part of the temperature measuring device) it becomes possible to specifically use only said sensor(s) which are expected to resist the arising temperatures at the particular food or environment. Due to this choice an exposure of sensors which are not intended for the expected temperatures can be avoided and a damage at the sensors avoided.

The second part can be fixedly arranged at the second holding part and the second holding part can be connected (in assembled state) to the first holding part and further the second holding part can be connected thereby to the first part. In each case there can be conductor lines inside the first and second parts and first and second holding parts such that the second sensor(s), the ambient sensor(s) and the first sensor(s) can be connected to the electronic component.

The first part and the second part can have a housing inside which the corresponding temperature sensors can be arranged and the housing can have a suitable material with a good thermal conductivity for enabling a quick response of the temperature sensor(s) on a temperature change at the particular housing. The holding parts can have a housing (part) which can have a better temperature isolation than the first part and/or the second part for allowing the temperature measuring device to be held at the holding parts without quickly transferring the heat to the temperature sensors of the first and/or second part.

By having two sensing parts which are configured for sensing of different ranges of temperature the temperature measuring device can represent a cross category wireless food probe for low and high temperature food preparation processes.

The temperature measuring device can be operate at higher temperatures, on multiple appliances - cross category (ovens, hobs, BBQ, ...).

The first and second sensors and electronic component can be able to measure in the mentioned temperature ranges (configured such to operate the sensors and the controller/electronic component) and receive the corresponding signals.

According to a further embodiment of the temperature measuring device the first range of temperature covers temperatures of lower or equal to 100 °C and the second range of temperature covers temperatures as the first range of temperature and also greater than 100 °C.

For example, it is also possible that the second range of temperature can contain also the entire first range of temperature and in addition to that also temperatures above 100 °C in an example.

The second range of temperature to be measured can cover also temperatures above said temperatures which could be critical for the electronic component (e. g. 100 °C) since the second temperature sensor(s) are not located at the first part where the electronic component is. The holding parts can physically separate the first part and the second part and lower the heat transfer from the second part to the first part thereby thermally at least partly isolating the first part from the second part.

The first part can have a tip region and also the second part can have a tip region (for sticking it into the food). Said tip regions can be tapered or curved or bulged or of different shapes. The first part can be longer than the second part or vice versa or of equal length. By the shape the user can recognize which part should be put into which environment or food.

According to a further embodiment of the temperature measuring device the first holding part and/or the second holding part can be connected to each other at their axial ends or are embodied in an integral manner.

The second part can mainly extend from the holding part along an opposite direction and under angle) along which the first part mainly extends.

According to a further embodiment of the temperature measuring device the first holding part and/or the second holding part comprise both a connecting means by which they can be connected to each other at their axial ends.

According to a further embodiment of the temperature measuring device the connecting means is a magnetic component and/or a snap component and/or a sticking component and/or a threaded component and/or a snipped component and/or a bajonet cap.

According to a further embodiment of the temperature measuring device the fixture element is a clip or a bracket or another type of fastener or holder by which the first holding part or the second holding part can be hooked at a margin of the cookware and thereby the temperature measuring device can be positioned such that the first part or the second part extends into the cookware at a predefined angle with regard to the margin of the cookware and into the cooking environment.

A quick and easy connection or disconnection can be achieved by the mentioned connecting means. These connecting means can be provided at the holding parts.

According to a further embodiment of the temperature measuring device it comprises an electric connection between the electronic component and the second part.

The electric connection can comprise a conductor path to each second sensor.

According to a further embodiment of the temperature measuring device It comprises at least one ambient sensor which is located in the first holding part and/or in the second holding part and/or in the second part, and which is configured to measure a temperature of an environment of the temperature measuring device.

The ambient sensor can be located in one of the holding parts and provide an information about the temperature of the environment whether the temperature measuring device is in a region where the temperature measurement of the first and/or second sensor makes sense or is needed or not. The ambient sensor can recognize, for example, whether the temperature measuring device is inside an oven. The ambient sensor can also be placed in the second part, or there can be both an ambient sensor in one of the holding parts and at the same time another ambient sensor in the second part. An ambient sensor can be also located in the second part.

In case that a cooking device doesn't have a precise temperature regulation (for example BBQ or smokers) an ambient sensor (in the first holding part or in the second part) can help the user to detect and control the right temperature of the cooking. In the oven, where the precise temperature regulation exists, it can be used as a redundancy. Also, the ambient sensor can enable a development of different algorithms (safety and functional). For example an ambient sensor can be used to detect if the temperature measuring device is in the oven or not, etc..

If the temperature measuring device is inserted into a meat piece, for example not till the marking line - what can mean an improper use - and if then the temperature measuring device is put into an oven - it can possibly recognized that there is an inproper use such that the ambient sensor temperature trend and a trend of one of the first or second on food side can be similar (due to the thermal conductivity of the measuring part this temperature is expected lower than ambient temperature for example if meat is prepared).

The ambient sensor in the first holding part can thus be used to measure the temperature of an environment which is not the environment for food preparation, for example air around a meat (also if the meat itself is in hot oil) and also of an environment of the food preparation (for example in an oven)

According to a further embodiment of the temperature measuring device the second part comprises two or more second temperature sensors.

By several sensors (first/second) a better accuracy and precision of the measurements can be achieved. For example, the more sensors there are the easier it gets to detect the center of the food (coldest point). For the second part there can be just one temperature sensor or several ones.

If there are several sensors, more temperature information is available and one can choose depending on which temperature a regulation of a cooking process can be performed, what can be monitored. In this regard also an averaging can be done etc..

The first and/or second temperature sensors can be, for example NTC sensors or other suitable temperature sensors (PTC, resistors, RTD (resistance temperature detector) etc.).

According to a further embodiment of the temperature measuring device the electronic component comprises a battery and a wireless communication device for sending measured temperature signals from the first temperature sensor and/or from the second temperature sensor to a household appliance and/or to an external receiver and/or to a repeater.

Further, also information/data about a battery level status, ID of the temperature measuring device and also other informations can be generated and transmitted.

The wireless communication can be a Bluetooth connection or a wireless connection in general (all possible types of) and the external receiver can be a household appliance or a mobile phone or a data platform (cloud) or a tablet or similar.

According to a further embodiment of the temperature measuring device the fixture element at the first holding part is oriented such that when the first holding part is attached to the cookware the first part extends away from the cookware and the second part extends into the cooking environment under a predefined first angle with regard to the margin of the cookware or parallel to the margin of the cookware.

The temperature measuring device can have a continuous shape along the transition from the first part to the first holding part and from the second holding part to the second part.

Regarding a possible application of the temperature measuring device it can be used in a built-in oven or a standalone oven or a cooking hob, a pan, a pot or other devices for preparing or cooking food, in other words for household appliances, household appliances with heating cavity, household appliances with a cooking area (induction, gas,...), indoor and outdoor grills (BBQ,...), ovens, food preparation devices (convection ovens,...) and similar.

The first and/or second part (their housing) can contain stainless steal with, for example, a probe diameter of 5mm.

A possible ambient temperature can be, for example, 550°C or similar.

According to a further embodiment of the temperature measuring device the fixture element at the second holding part is oriented such that when the second holding part is attached to the cookware the first part extends away from the cookware and the second part extends into the cooking environment under a predefined second angle with regard to the margin of the cookware or parallel to the margin of the cookware.

According to a further embodiment of the temperature measuring device the first holding part is angled under a first angle and the second holding part is angled under a second angle which differ from each other or is straight.

By the mentioned temperature measuring device the additional second part can improve the cooking experience and bring more possibilities/applications to the end user and encourage the user to use only one wireless probe for many different possible uses or use cases. Therefore, a merging of multiple probes or wireless probe or wired probes into one can be achieved as a user friendly probe which can result in monetary and spatial optimization for the user and an improved, utilized cooking experience. Overall this represents a food and environment probe of higher and improved level of utility at different devices and food preparation processes/technologies.

The holding parts can be a handle each for easy operating the first and second part. Further, the temperature measuring device can be dishwasher safe.

The second part can comprise a metal part (as housing and same as the first part or different from it) or can be made from another temperature withstandable material, which can be thermally isolated from the remaining parts of the temperature measuring device.

When having the second part applied there may be no need to have an ambient sensor placed in the first holding part (or it can be present if needed) - since the second part can overtake its functionality of sensing the ambient temperature also. With this operation it becomes possible to improve precision, speed and accuracy of the ambient temperature measurement because the ambient sensor in the second part can respond faster than in one of the holding parts due to a quicker heat transport in the second part material.

The charging of the temperature measuring device can be supported by the household device. For example - in an oven (or another household appliance) there can be some predefined place outside of the oven cavity where the temperature measuring device can be held and charged, for example at or near the control panel.

The temperature measuring device can also be applied at other food preparation processes (sous vide, pasteurization, food melting, slow cook...) and in various appliances or usage on other appliances (air fryer, sous vide cooker, free stand cookers, ...) or different temperature sensitive food preparations. The temperature measuring device can be used also before cooking processes - for meat or other raw food temperature check or after cooking processes - monitoring of temperature while resting food outside the cooking environment.

By the fixture element(s) it becomes possible for the temperature measuring device being attached directly to the cookware, for example pot or pan, thus avoiding or lowering a risk of wrong positioning by any inexperience of the user when attaching the temperature measuring device.

This also leads the user more clearly to the way to use the temperature measuring device (mainly on a pan, in a pot and other containers/cookware) and at the same time reduces the possibility of incorrect use and destruction of the temperature measuring device (for example, if the user inserts a "meat preparation part" (first part) into a liquid or substance that has temperature higher than 100°C). The first part can be used in an oven or sticked into food which interior will not exceed 100°C.

The main advantage of this solution is that if both parts of the temperature measuring device have integrated holding parts (or even if separated) an additional possibility of using them on dishes, pans and other kitchen utensils for use on the hob is reached. The temperature measuring device can thus be used with one holding part to measure the temperature at the edge of the container/cookware, but if the probe is used with the other holding part, the temperature measurement can be moved more towards the centre of the container/cookware, which is more suitable for in some cases of temperature measurement and use.

This solution also increases the usability of the temperature measuring device with different diameters and heights of containers/cookware - in most cases, the temperature measuring device can be used in at least one way for all containers/cookware that the user has in his assortment.

With this solution, the user can move the temperature measuring device round the edge of the container/cookware as he/she wishes.

Further, with the fixture elements and the angled orientation possible improvements can arise also when used in the oven, on the grill and elsewhere (for example, in the oven when sticking the temperature measuring device to the oven rack or the edge of the baking tray or elsewhere).

The probe can broadcast directly to the household appliance or external device (for example mobile phone or tablet) or it can send a signal to a charger, which can have an integrated repeater - electronics, which increases (amplifies) a signal strength and sends the signal to the household appliance.

All mentioned features and their advantages can apply also to a corresponding method for operating and/or applying the temperature measuring device.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate a comparative embodiment and embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 shows a temperature measuring device according to an embodiment of the invention for measuring a temperature of a food and/or of a cooking environment located at different position at a pot.
Fig. 2 shows the temperature measuring device from Fig. 1 in a perspective view.
Fig. 3a shows the temperature measuring device according to an embodiment of the invention in an assembled manner.
Fig. 3b shows the temperature measuring device according to an embodiment of the invention in a disassembled manner.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

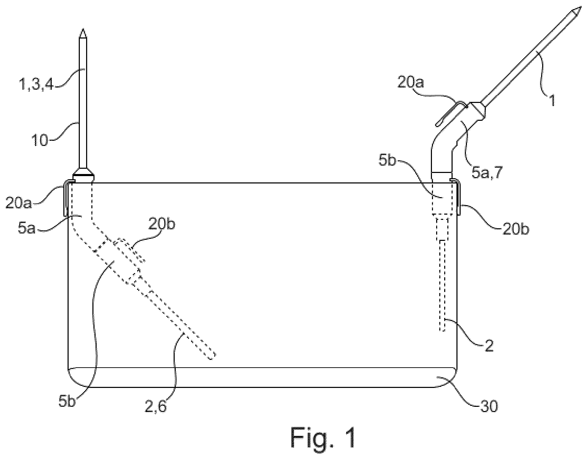

Fig. 1 shows a temperature measuring device according to an embodiment of the invention for measuring a temperature of a food and/or of a cooking environment located at different position at a pot. The temperature measuring device 10 for measuring a temperature of a food and/or of a cooking environment, comprises a first part 1 which includes at least one first temperature sensor 3 and an electronic component 4 for operating the at least one first temperature sensor 3; a first holding part 5a, to which the first part 1 is connected; and a second part 2 and a second holding part 5b to which the second part 2 is connected, wherein the first holding part 5a and/or the second holding part 5b comprises an angled shape with regard to its longitudinal extent and wherein the first holding part 5a can be physically connected and removed with the second holding part 5b, wherein the first holding part 5a and the second holding part 5b comprises a fixture element 20a and 20b which is arranged at a lateral side of the first holding part 5a and of the second holding part 5b and by which the first holding part 5a and of the second holding part 5b can be attached at a cookware 30 in a predefined position for measuring the temperature of the food and/or of the cooking environment, wherein the second part 2 includes at least one second temperature sensor and the electronic component 4 is configured to operate the at least one second temperature sensor 6 and wherein the at least one first temperature sensor 3 and the at least one second temperature sensor 6 and the electronic component 4 are configured such that a first range of a temperature to be measured by the at least one first temperature sensor 3 at least partly differs from a second range of a temperature to be measured by the at least one second temperature sensor 6.

The first part 1 can be embodied such to have a material (housing) with a high thermal conductivity and which can include the electronic component 4 inside a longitudinal tip-like housing. The first holding part 5a can have also a longitudinal part between the first part 1 and an angled region inside which the ambient sensor 7 can be located. This first part 1 should not exceed the first range temperature in order to not harm the electronic component 4.

The second part 2 can be connected with the second holding part 5b to a side of the first holding part 5a which is opposite to a side of the first holding part 5a to which the first part 1 is connected.

The temperature measuring device 10 can comprise an electric connection between the electronic component 4 and the second part 2 (not shown) when both holding parts 5a and 5b are connected (assembled) together.

The second part 2 can be shorter than the first part 1 and can have a tip region at its end (opposite the holding parts), wherein said tip region can be tapered (to be put into the food to be measured) or curved or flat. The first part 1 can have an end opposite to the first holding part 5a which can be a tip region wherein said tip region can be tapered (to be put into the food to be measured) or curved.

As shown in Fig. 1 the temperature measuring device 10 can be placed with one of the fixture elements 20a, 20b, which can each be a clip or a bracket by which the first holding part 5a, for example, can be hooked at a margin of the cookware 30 and thereby the temperature measuring device 10 can be positioned such that the second part 2 extends into the cookware 30 and into the cooking environment, for example oil with temperature above 100 deg. The second part 2 can then extend under a predefined angle with regard to the margin of the cookware 30 and into the cooking environment. In order to achieve this orientation, the first holding part 5a is angled in this embodiment. The fixture element 20a of the first holding part 5a can be oriented such that the first holding part 5a with its straight region extends along the inner margin of the cookware 30 and is oriented such that when the first holding part 5a is attached to the cookware 30 the first part 1 extends away from the cookware 30 and the second part 2 extends into the cooking environment under a predefined first angle with regard to the margin of the cookware 30. Further, it is also possible that the fixture element 20b of the second holding part 5b can be used to attach the second holding part 20b parallel to the margin of the cookware 30. Under such position the second part 2 can extend also in a parallel manner along the margin of the cookware 30 towards its bottom and into the cooking environment (for example oil). In other words, the both fixture elements 20a and 20b are oriented such that when attached to the cookware (pot) it is the second part 2 which extends into the interior of the cookware, either under angle or straight (there is either an angle in the first holding part and/or in the second holding part, maybe equal or different, by which then either the first part extends outward from the cookware in straight or angled manner and/or the second part extends into the cookware in straight or angled manner), and it is the first part 1 which extends out of the cookware. By such configuration of the temperature measuring device 10 a placing of the first part 1 with its sensitive electronic components into the cooking environment of a pot, for example, where it is expected to reach temperatures above 100 °C, can be prevented or the probability therefore at least lowered.

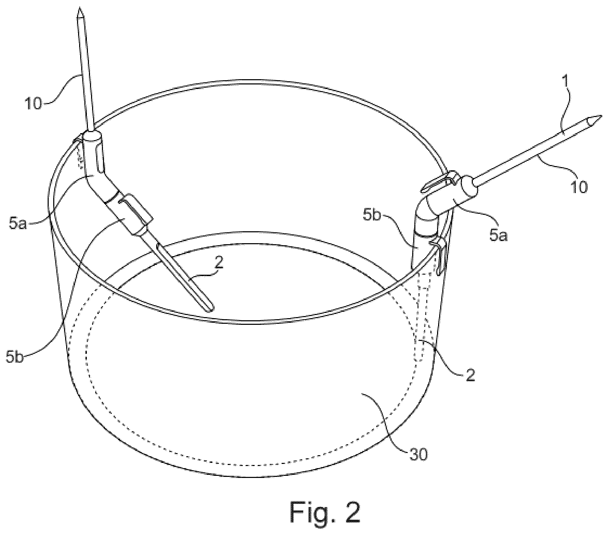

Fig. 2 shows the temperature measuring device 10 from Fig. 1 in a perspective view In Fig. 2 the perspective from an upper view into the cookware 30 (pot) is shown with both possible attachments of the first holding part 5a and second holding part 5b as shown and explained in Fig. 1 and the corresponding description. In both versions it is the second part 2 which extends into the cooking environment (straight or under angle) and the first part 1 which extends outwards (straight or under angle). Here, the first holding part 5a is the angled one but it is also possible that the second holding part 5b is angled also or instead.

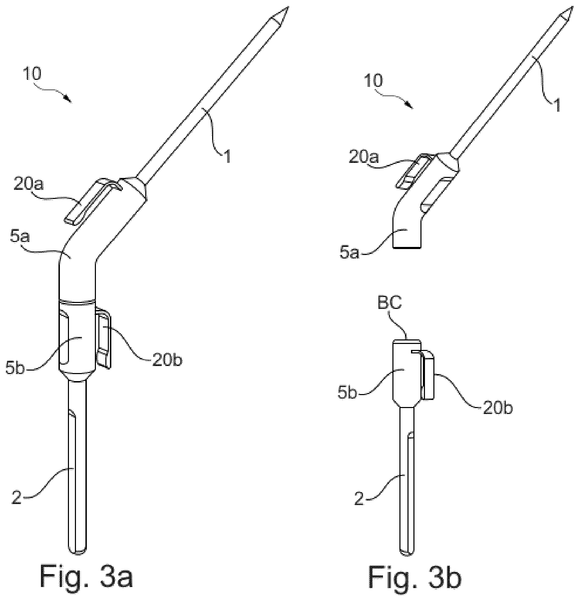

Fig. 3a shows the temperature measuring device according to an embodiment of the invention in an assembled manner.

Fig. 3b shows the temperature measuring device according to an embodiment of the invention in a disassembled manner.

In Fig. 3a the first holding part 5a and the second holding part 5b are stacked together, wherein the first holding part 5a and/or the second holding part 5b can comprise a connecting means by which they can be connected to each other at their axial ends. In particular, the connecting means can be a magnetic component and/or a snap component and/or a sticking component and/or a threaded component and/or a snipped component and/or a bajonet cap BC as shown in Fig. 3b.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents.

## Claims

1. Temperature measuring device (10) for measuring a temperature of a food and/or of a cooking environment, comprising:
- a first part (1) which includes at least one first temperature sensor (3) and an electronic component (4) for operating the at least one first temperature sensor (3);
- a first holding part (5a), to which the first part (1) is connected; and
- a second part (2) and a second holding part (5b) to which the second part (2) is connected, wherein the first holding part (5a) and/or the second holding part (5b) comprises an angled shape with regard to its longitudinal extent and wherein the first holding part (5a) can be physically connected and removed with the second holding part (5b), wherein the first holding part (5a) and/or the second holding part (5b) comprises a fixture element (20a, 20b) which is arranged at a lateral side of the first holding part (5a) and/or of the second holding part (5b) and by which the first holding part (5a) and/or the second holding part (5b) can be attached at a cookware (30) in a predefined position for measuring the temperature of the food and/or of the cooking environment, wherein the second part (2) includes at least one second temperature sensor (6) and the electronic component (4) is configured to operate the at least one second temperature sensor (6) and wherein the at least one first temperature sensor (3) and the at least one second temperature sensor (6) and the electronic component (4) are configured such that a first range of a temperature to be measured by the at least one first temperature sensor (3) at least partly differs from a second range of a temperature to be measured by the at least one second temperature sensor (6).

2. Temperature measuring device (10) according to claim 1, wherein the first range of temperature covers temperatures of lower or equal to 100 °C and the second range of temperature covers temperatures as the first range of temperature and also greater than 100 °C.

3. Temperature measuring device (10) according to claim 1 or 2, wherein the first holding part (5a) and/or the second holding part (5b) can be connected to each other at their axial ends or are embodied in an integral manner.

4. Temperature measuring device (10) according to any of claims 1 to 3, wherein the first holding part (5a) and/or the second holding part (5b) comprise both a connecting means by which they can be connected to each other at their axial ends.

5. Temperature measuring device (10) according to claim 4, wherein the connecting means is a magnetic component and/or a snap component and/or a sticking component and/or a threaded component and/or a snipped component and/or a bajonet cap (BC).

6. Temperature measuring device (10) according to any of claims 1 to 5, wherein the fixture element (20a, 20b) is a clip or a bracket or another type of fastener or holder by which the first holding part (5a) or the second holding part (5b) can be hooked at a margin of the cookware (30) and thereby the temperature measuring device (10) can be positioned such that the first part (1) or the second part (2) extends into the cookware (30) at a predefined angle with regard to the margin of the cookware (30) and into the cooking environment.

7. Temperature measuring device (10) according to any of claims 1 to 6, which comprises an electric connection between the electronic component (4) and the second part (2).

8. Temperature measuring device (10) according to any of claims 1 to 7, which comprises at least one ambient sensor (7) which is located in the first holding part (5a) and/or in the second holding part (5b) and/or in the second part (2), and which is configured to measure a temperature of an environment of the temperature measuring device (10).

9. Temperature measuring device (10) according to any of claims 1 to 8, wherein the second part (2) comprises two or more second temperature sensors (6).

10. Temperature measuring device (10) according to any of claims 1 to 9, wherein the electronic component (4) comprises a battery and a wireless communication device for sending measured temperature signals from the first temperature sensor (3) and/or from the second temperature sensor (6) to a household appliance and/or to an external receiver.

11. Temperature measuring device (10) according to any of claims 1 to 10, wherein the fixture element (20a, 20b) at the first holding part (5a) is oriented such that when the first holding part (5a) is attached to the cookware (30) the first part (1) extends away from the cookware (30) and the second part (2) extends into the cooking environment under a predefined first angle with regard to the margin of the cookware (30) or parallel to the margin of the cookware (30).

12. Temperature measuring device (10) according to any of claims 1 to 10, wherein the fixture element (20a, 20b) at the second holding part (5b) is oriented such that when the second holding part (5b) is attached to the cookware the first part (1) extends away from the cookware (30) and the second part (2) extends into the cooking environment under a predefined second angle with regard to the margin of the cookware (30) or parallel to the margin of the cookware (30).

13. Temperature measuring device (10) according to any of claims 1 to 12, wherein the first holding part (5a) is angled under a first angle and the second holding part (5b) is angled under a second angle which differ from each other or is straight.
